# EUROPÄISCHE PATENTANMELDUNG

(11) **EP 2 277 722 A2**
(43) Veröffentlichungstag der Anmeldung: **26.01.2011**
(21) Anmeldenummer: 10168725.9
(22) Anmeldetag: 07.07.2010
(51) Int. Cl.: B60D 1/06, B60D 1/14, B60D 1/44, B60D 1/52, B62D 21/02

(54) **Anhängekupplung für Kraftfahrzeuge**

(30) Priorität: 21.07.2009 DE 102009035334
(71) Anmelder: SCAMBIA Industrial Developments Aktiengesellschaft, 9494 Schaan (LI)
(72) Erfinder: Di Parma, Raffaele, 71706 Markgröningen (DE); Krauss, Axel, 71067 Sindelfingen (DE); Nägele, Karl, 74321 Bietigheim-Bissingen (DE); Riehle, Jörg, 71679 Asperg (DE)
(74) Vertreter: Hoeger, Stellrecht & Partner Patentanwälte

(57) **Zusammenfassung**

Um eine Anhängekupplung für Kraftfahrzeuge umfassend ein Anhängeelement (12) zum Anhängen eines Fahrzeuganhängers oder Anbau eines Hecklastenträgers, einen Querträger (24), mit welchem eine das Anhängeelement (12) tragende Halteeinheit (26) verbunden ist, und den Querträger (24) an seinen Endbereichen (32,34) mit einer Fahrzeugkarosserie (42) verbindende Seitenträger (36,38), derart zu verbessern, dass diese möglichst materialsparend und möglichst einfach herstellbar ist, wird vorgeschlagen, dass der Querträger (24) ein Querträgerrohr (44) umfasst, dass die Halteeinheit (26) lösbar am Querträger (24) gehalten ist, dass die Halteeinheit (26) den Querträger (24) in Umfangsrichtung (70) umgreifend ausgebildet ist und mindestens zwei Halteelemente (60,62,64) aufweist, die mit Stützflächen (68,84) an Mantelflächenbereichen (66,82) des Querträgerrohrs (44) anliegen, und dass die Halteeinheit (26) durch eine kraftschlüssige Klemmung am Querträger (24) fixierbar ist.

## Beschreibung

Die Erfindung betrifft eine Anhängekupplung für Kraftfahrzeuge, umfassend ein Anhängelement zum Anhängen eines Fahrzeuganhängers oder Anbau eines Hecklastenträgers, einen Querträger, mit welchem eine das Anhängeelement tragende Halteeinheit verbunden ist, und den Querträger an seinen Endbereichen mit einer Fahrzeugkarosserie verbindende Seitenträger.

Derartige Anhängekupplungen sind aus dem Stand der Technik, beispielsweise der deutschen Patentanmeldung 198 57 321 A bekannt.

Bei diesen Anhängekupplungen ist üblicherweise die Halteeinheit mit dem Querträger verschweißt, um eine feste Verbindung zu schaffen, insbesondere eine Verbindung, die einerseits den ständigen Lastwechseln und den dynamischen Belastungen Rechnung trägt.

Eine derartige Schweißverbindung hat jedoch den Nachteil, dass sie aufwändig herzustellen ist und andererseits auch beim Querträger massive Bauteile erfordert, damit trotzt der beim Schweißen auftretenden Gefügeveränderungen eine ausreichende Steifigkeit und Tragfähigkeit des Querträgers vorhanden ist.

Der Erfindung liegt daher die Aufgabe zugrunde, eine Anhängekupplung der gattungsgemäßen Art derart zu verbessern, dass diese möglichst materialsparend und möglichst einfach herstellbar ist.

Diese Aufgabe wird bei einer Anhängekupplung der eingangs beschriebenen Art erfindungsgemäß dadurch gelöst, dass der Querträger ein Querträgerrohr umfasst, dass die Halteeinheit lösbar am Querträger gehalten ist, dass die Halteeinheit den Querträger in Umfangsrichtung umgreifend ausgebildet ist und mindestens zwei Halteelemente aufweist, die mit Stützflächen an Mantelflächenbereichen des Querträgerrohrs anliegen, und dass die Halteeinheit durch eine kraftschlüssige Klemmung am Querträger fixierbar ist.

Der Vorteil der erfindungsgemäßen Lösung ist darin zu sehen, dass bei dieser ein Anschweißen der Halteeinheit an den Querträger nicht mehr erforderlich ist und damit einerseits der Aufwand bei der Herstellung einer ausreichend stabilen Schweißverbindung zur Fixierung der Halteeinheit entfällt und andererseits auch die durch das Schweißen bedingten Gefügeveränderungen im Querträger nicht mehr auftreten, so dass bei der Dimensionierung des Querträgers diese Gefügeveränderungen nicht mehr zu beachten sind und somit ein Querträger verwendet werden kann, der ein geringeres Gewicht aufweist.

Um die Kräfte in den Querträger optimal einleiten zu können, ist vorzugsweise vorgesehen, dass die Stützflächen der Halteelemente insgesamt in Umfangsrichtung über einen Winkelbereich von mehr als 200° an der Mantelfläche des Querträgerrohrs anliegen.

Noch besser ist es, wenn die Stützflächen insgesamt in Umfangsrichtung über einen Winkelbereich von mehr als 270° an der Mantelfläche des Querträgerrohrs anliegen.

Mit diesen Lösungen ist somit eine ausreichend stabile Abstützung der Halteeinheit an dem Querträgerrohr gegeben, so dass insbesondere sämtliche auf das Anhängeelement wirkenden Kräfte optimal in das Querträgerrohr eingeleitet werden können, obwohl keine Schweißverbindung zwischen der Halteeinheit und dem Querträgerrohr besteht.

Hinsichtlich der Fixierung der Halteeinheit an dem Querträgerrohr sind die unterschiedlichsten Lösungen denkbar. Beispielsweise wäre es denkbar, Verbindungselemente zwischen den Halteelementen vorzusehen, die den Querträger durchdringen.

Eine derartige Durchdringung des Querträgers hat jedoch den Nachteil, dass dieser hinsichtlich seiner Stabilität beeinträchtigt ist.

Aus diesem Grund sieht eine aus Stabilitätsgründen besonders vorteilhafte Lösung vor, dass die Halteelemente durch durchdringungsfrei zum Querträger verlaufende Verbindungselemente miteinander verbunden sind.

Diese Verbindungselemente verlaufen somit außerhalb des Querträgers und haben lediglich die Aufgabe, die Halteelemente relativ zueinander zu fixieren.

Die Halteelemente könnten dabei in unterschiedlichster Art und Weise ausgebildet sein. Beispielsweise können alle Halteelemente als identische Teile ausgebildet sein.

Eine vorteilhafte Lösung sieht vor, dass die Halteeinheit als ein Halteelement einen Grundkörper aufweist, der eine das Anhängeelement haltende Aufnahme trägt, und dass mit dem Grundkörper als weiteres Halteelement mindestens eine Haltespange verbunden ist.

Mit einer derartigen Ausbildung der Halteeinheit lässt sich in besonders einfacher Weise eine optimale Anbindung des Anhängeelements an dem Querträger erreichen.

Dabei wären grundsätzlich zwei Halteelemente ausreichend.

Eine besonders stabile und auch hinsichtlich der Lasteinleitung günstige Lösung sieht vor, dass mit dem Grundkörper zwei in Längsrichtung des Querträgers im Abstand voneinander angeordnete Haltespangen als Haltekörper verbunden sind.

Durch die beiden, in Längsrichtung des Querträgers im Abstand voneinander angeordneten Haltespangen besteht in besonders vorteilhafter Weise die Möglichkeit, die auf das Anhängeelement wirkenden Kräfte optimal in den Querträger einzuleiten und dabei auch insbesondere das Anhängeelement optimal relativ zum Querträger zu stabilisieren.

Insbesondere hat eine derartige verbesserte Einleitung der Kräfte in den Querträger auch den Vorteil, dass der Querträger aus Material mit weniger Gewicht hergestellt werden kann, das heißt beispielsweise dünnerer Wandstärke, da die jeweils an den einzelnen Stellen wirkenden Kräfte geringer sind.

Eine Verbindung derartiger Haltespangen mit dem Grundkörper könnte dabei in unterschiedlichster Art und Weise erfolgen.

Beispielsweise könnten die Haltespangen und der Grundkörper insgesamt durch eines oder mehrere Verbindungselemente umschlungen sein.

Eine besonders günstige Lösung sieht vor, dass die Haltespangen auf gegenüberliegenden Seiten mit dem Grundkörper verbunden sind, wobei hierzu insbesondere Verbindungselemente eingesetzt werden, die die Haltespangen und den Grundkörper durchgreifen, also beispielsweise schrauben.

Hinsichtlich der Anordnung der Halteelemente am Querträger wurden bislang keine näheren Angaben gemacht.

Beispielsweise wäre es denkbar, die Halteelemente als Haltebänder auszubilden.

Eine besonders günstige Lösung sieht vor, dass die Halteelemente massive Körper sind, aus denen die Halteeinheit gebildet ist.

Insbesondere ist im Fall massiver Körper vorgesehen, dass diese formsteif sind, so dass mit derartigen Halteelementen in optimaler Weise die Kräfte auf den Querträger übertragen werden können.

Die erfindungsgemäß ausgebildeten Halteelemente können dabei in unterschiedlichster Art und Weise relativ zueinander angeordnet sein.

So sieht eine vorteilhafte Lösung vor, dass die Halteelemente auf gegenüberliegenden Seiten einer Trennebene angeordnet sind.

Vorzugsweise ist dabei die Trennebene so ausgerichtet, dass sie im montierten Zustand der Anhängekupplung innerhalb eines Winkelbereichs von plus/minus 20° zu einer horizontalen Ebene verläuft.

Noch vorteilhafter ist es, wenn die Trennebene so ausgerichtet ist, dass sie im montierten Zustand der Anhängekupplung innerhalb eines Winkelbereichs von plus/minus 10° zu einer horizontalen Ebene verläuft.

Insbesondere ist eine vorteilhafte Fixierung der Halteelemente an dem Querträger dann gegeben, wenn die Halteelemente Stützflächen aufweisen, die mit geringer werdendem Abstand von der Trennebene mit zunehmend größer werdendem Abstand zueinander verlaufen, so dass die Stützflächen in Richtung der Trennebene sich erweiternd verlaufen.

Ein derartiger sich erweiternder Verlauf kann in unterschiedlichster Art und Weise realisiert werden.

Eine einfache Lösung eines sich erweiternden Verlaufs der Stützflächen wäre ein keilförmiger Verlauf. Andere Verläufe wären beispielsweise im Querschnitt parabelförmige, halbkreisförmige oder halbelipsenförmige Verläufe oder auch Kombinationen derartiger Verläufe.

Um eine hohe Steifigkeit der Verbindung zwischen der Halteeinheit und dem Querträger zu erreichen ist vorzugsweise auch vorgesehen, dass die die Stützflächen tragenden Halteelemente formsteif sind, so dass damit auch zwangsläufig die Stützflächen Flächen formsteifer Körper darstellen.

Prinzipiell könnten die Stützflächen in unterschiedlichster Art und Weise ausgebildet sein.

Um einen festen Sitz der Stützflächen an den Mantelflächenbereichen des Querträgerrohres gewährleisten zu können, wäre es beispielsweise denkbar, die Stützflächen als profilierte Flächen, das heißt mit einer Oberflächenstruktur auszubilden. Derartige Oberflächenstrukturen könnten beispielsweise Verzahnungen oder vorspringende Rippen oder ähnliche Strukturen sein, wobei diese Oberflächenstrukturen dann beispielsweise so auszubilden wären, dass sie sich in die Mantelflächenbereich des Querträgerrohrs eingraben um eine feste Verbindung mit diesem herzustellen.

Aus Gründen einer möglichst einfachen Herstellbarkeit der Halteelemente ist vorzugsweise vorgesehen, dass die Stützflächen flächenhaft an den Mantelflächenbereichen des Querträgerrohrs anliegen.

Ein derartiges flächenhaftes Anliegen der Stützflächen erfordert nicht zwingend ein vollflächiges Anliegen der Stützflächen. Hierbei ist es beispielsweise ausreichend, wenn die Stützflächen zu mehr als zwei Drittel ihrer Flächenausdehnung vollflächig an den Mantelflächenbereichen anliegen.

Hinsichtlich der kraftschlüssigen Klemmung zur Fixierung der Halteeinheit an dem Querträger wurden bislang keine näheren Angaben gemacht.

Beispielsweise ist eine Ausführungsform denkbar, bei welcher die Halteeinheit mit den beschriebenen Stützflächen an dem Querträger anliegt und eine zusätzliche Fixierung der Halteeinheit durch eine Klemmung erfolgt.

Eine besonders günstige Lösung sieht dabei vor, dass die Halteeinheit durch Klemmelemente am Querträger gehalten ist.

Diese Klemmelemente könnten beispielsweise zusätzliche Klemmelemente sein, die außerhalb der Halteelemente oder neben den Halteelementen an dem Querträger, insbesondere an dem Querträgerrohr angreifen.

Bei einer besonders einfachen Lösung ist vorgesehen, dass die Halteelemente als Klemmelemente wirken, so dass die Halteelemente eine doppelte Funktion haben, nämlich einerseits eine ausreichend gute Abstützung der Halteeinheit an dem Querträger zu gewährleisten, um die Kräfte optimal in den Querträger einzuleiten, und andererseits die Fixierung der Halteeinheit an dem Querträger sicherzustellen.

Dabei ist beispielsweise vorgesehen, dass die Halteelemente mit mindestens einem Teil der Stützflächen klemmend an den Mantelflächenbereichen des Querträgerrohrs anliegen.

Besonders günstig ist es, wenn die Halteelemente mit allen Stützflächen klemmend an den Mantelflächenbereichen des Querträgerrohrs anliegen.

Zu der Ausbildung des Querträgers selbst wurden bislang keine näheren Angaben gemacht, außer die, dass der Querträger ein Querträgerrohr umfasst.

Um einen Querträger mit einem Querträgerrohr in einfacher Weise herstellen zu können, ist vorzugsweise vorgesehen, dass das Querträgerrohr in Umfangsrichtung kantenfrei ausgebildet ist, das heißt, dass das Querträgerrohr selbst keine quer zur Umfangsrichtung verlaufenden Kanten aufweist.

Besonders günstig ist es insbesondere für die Stabilität des Querträgerrohrs, wenn das Querträgerrohr eine in Umfangsrichtung zu mehr als 70% des Umfangs gekrümmt verlaufende Mantelfläche aufweist. Noch besser ist es, wenn das Querträgerrohr eine in Umfangsrichtung zu mehr als 80%, noch besser mehr als 90% des Umfangs gekrümmt verlaufende Mantelfläche aufweist.

Eine besonders zweckmäßige Lösung sieht dabei vor, wenn das Querträgerrohr ein in Umfangsrichtung stets gekrümmt verlaufende Mantelfläche aufweist, wobei die Krümmung gering sein kann, das heißt bis auf Werte nahe oder bei Null zurückgehen kann.

Eine besonders günstige Lösung sieht vor, dass das Querträgerrohr ein Rundrohr ist.

Der Begriff Rundrohr bedeutet in diesem Zusammenhang nicht, dass das Querträgerrohr einen kreisrunden Querschnitt aufweisen muss, sondern lediglich, dass das Querträgerrohr einen gerundeten Querschnitt aufweist, wobei die Rundungen variieren können.

Eine Lösung sieht dabei vor, dass das Querträgerrohr beispielsweise ein in Umfangsrichtung hinsichtlich ihrer Krümmung in Umfangsrichtung variierende Mantelfläche aufweist.

Eine besonders einfache Lösung sieht vor, dass das Querträgerrohr eine in Umfangsrichtung konstant gekrümmt verlaufende Mantelfläche aufweist, das heißt einen im Wesentlichen kreisrunden Querschnitt aufweist.

Prinzipiell wäre es denkbar, das Querträgerrohr aus mehreren Teilen zusammenzusetzen.

Eine besonders günstige Lösung sieht jedoch vor, dass das Querträgerrohr ein einstückiges Teil ist.

Aus Kostengründen ist es noch vorteilhafter, wenn das Querträgerrohr ein einstückig hergestelltes Teil ist.

Hinsichtlich der Ausbildung der Mantelfläche des Querträgerrohrs sind die unterschiedlichsten Möglichkeiten denkbar. Das Querträgerrohr kann prinzipiell verschiedenste Geometrien aufweisen. Um die Halteeinheit mit den Halteelementen vorteilhaft montieren zu können, hat es sich als zweckmäßig erwiesen, wenn das Querträgerrohr im Bereich der Halteeinheit eine zylindrische Mantelfläche aufweist, wobei eine zylindrische Mantelfläche nicht zwingend eine kreiszylindrische Mantelfläche bedeutet, sondern jede Art von Querschnittsform beinhaltet, so lange diese im Bereich der Halteeinheit konstant ist.

Eine besonders zweckmäßige Lösung sieht vor, dass das Querträgerrohr über seine ganze Länge eine zylindrische Mantelfläche aufweist.

Um den Querträger einfach herstellen zu können, ist vorzugsweise vorgesehen, dass das Querträgerrohr frei von auf dessen Mantelfläche angeordneten und mit diesem verbundenen Körpern ist.

Derartige Körper könnten beispielsweise aufgesetzte Fixierelemente oder aufgesetzte Stabilisierungselemente sein, wobei diese Körper dann üblicherweise mit dem Querträgerrohr verschweißt werden.

Um insbesondere die Halteeinheit definitiv zum Querträger, insbesondere zum Querträgerrohr ausrichten zu können, ist vorzugsweise vorgesehen, dass das Querträgerrohr mit einer gegenüber der Mantelfläche zurückgesetzt ausgebildeten Aufnahme für ein Formschlusselement der Halteeinheit versehen ist.

Dies ist eine besonders einfache Art der drehfesten formschlüssigen Verbindung zwischen der Halteeinheit und dem Querträgerrohr, die insbesondere dann von Vorteil ist, wenn das Querträgerrohr ein im Wesentlichen kreisrunden Querschnitt aufweist und damit eine eindeutige Ausrichtung der Halteeinheit bei der Montage am Querträgerrohr aufwändig zu realisieren ist.

Eine besonders günstige Realisierung einer derartigen formschlüssigen Verbindung sieht vor, dass das Querträgerrohr mindestens einen Durchbruch zur Aufnahme eines Formschlusselements der Halteeinheit aufweist.

Alternativ dazu ist es denkbar, dass das Querträgerrohr eine Eintiefung zur Aufnahme des Formschlusselements der Halteeinheit aufweist.

Im Zusammenhang mit der bisherigen Beschreibung der einzelnen Ausführungsbeispiele wurde lediglich auf die Verbindung zwischen der Halteeinheit und dem Querträger, insbesondere dem Querträgerrohr eingegangen.

Es wurden im Zusammenhang mit den bisher beschriebenen Lösungen keine Aussagen darüber gemacht, wie die Verbindung zwischen dem Querträger, insbesondere dem Querträgerrohr, und den Seitenträgern realisiert werden soll.

Eine besonders günstige Lösung sieht vor, dass die Seitenträger endseitig des Querträgers mit lösbaren Seitenträgerhalteeinheiten an dem Querträger angreifen.

Damit ist ebenfalls die Möglichkeit eröffnet, eine zusätzliche Schweißung in den Endbereichen des Querträgers zu vermeiden und dabei eine vergleichbar einfache Verbindung zwischen dem Querträger und den Seitenträgern zu realisieren.

Diese Seitenträgerhalteeinheit könnte in unterschiedlichster Art und Weise ausgebildet sein.

Beispielsweise wäre es denkbar, die Seitenträgerhalteeinheit so auszubilden, dass diese in das Querträgerrohr endseitig eingreift und durch Fügen oder durch Formschlusselemente mit dem Querträgerrohr verbunden wird.

Eine andere vorteilhafte Lösung sieht vor, dass die Seitenträgerhalteeinheit mindestens zwei lösbar verbindbare Seitenträgerhalteelemente aufweist, welche mit Aufnahmeflächen an Mantelflächenbereichen des Querträgerrohrs anliegen.

Damit ist eine Möglichkeit einer Verbindung zwischen dem Querträger und den Seitenträgern geschaffen, die sich ähnlich ausbilden lässt, wie die Verbindung zwischen den Halteelementen und dem Querträgerrohr.

Beispielsweise ist daher vorgesehen, dass insbesondere die Aufnahmeflächen der Seitenträgerhalteelemente insgesamt in Umfangsrichtung über einen Winkelbereich von mehr als 200° an der Mantelfläche des Querträgerrohrs anliegen.

Noch besser ist es, wenn die Aufnahmeflächen insgesamt in Umfangsrichtung über einen Winkelbereich von mehr als 270° an der Mantelfläche des Querträgerrohrs anliegen.

Ferner ist vorzugsweise vorgesehen, dass die Seitenträgerhalteeinheit mit den Seitenträgerhalteelementen den Querträger in Umfangsrichtung umgreifend ausgebildet ist.

Ein derartiges Umgreifen in Umfangsrichtung lässt sich insbesondere dann günstig realisieren, wenn die Seitenträgerhalteelemente durch durchdringungsfrei zum Querträger verlaufende Verbindungselemente miteinander verbunden sind.

Diese Lösung hat den Vorteil, dass damit der Kraftfluss um den Querträger herum verläuft und somit den Querträger schwächende Durchdringungen desselben vermieden werden können.

Insgesamt kann dabei die Seitenträgerhalteeinheit in unterschiedlichster Art und Weise ausgebildet sein.

Eine zweckmäßige Lösung sieht vor, dass die Seitenträgerhalteeinheit als ein Seitenträgerhalteelement einen Basiskörper aufweist, der an dem jeweiligen Seitenträger angeordnet ist und dass mit dem Basiskörper mindestens ein weiteres Halteelement verbunden ist.

Dieses weitere Halteelement könnte beispielsweise ein Spannelement sein.

Eine besonders günstige Lösung sieht vor, dass dieses Halteelement ein Haltekörper ist.

Vorzugsweise sind dabei die Haltekörper auf gegenüberliegenden Seiten mit dem Basiskörper über Verbindungselemente verbunden.

Zweckmäßigerweise sind bei der Seitenträgerhalteeinheit die Seitenträgerhalteelemente auf gegenüberliegenden Seiten einer Trennebene angeordnet.

In diesem Fall ist vorzugsweise die Trennebene jedoch so ausgerichtet, dass sie im montierten Zustand der Anhängekupplung innerhalb eines Winkelbereichs zwischen 50° und 10° zu einer horizontalen Ebene verläuft, da damit in einfacher Weise die Montage des Querträgers an den Seitenträgerhalteeinheiten erleichtert werden kann.

Noch vorteilhafter ist es, wenn die Trennebene so ausgerichtet ist, dass sie im montierten Zustand der Anhängekupplung innerhalb eines Winkelbereichs von 40° bis 20° zu einer horizontalen Ebene verläuft.

Auch bei den Seitenträgerhalteeinheiten ist es günstig, wenn die Seitenträgerhalteelemente Aufnahmeflächen aufweisen, die mit geringer werdendem Abstand von der Trennebene mit zunehmend größer werdendem Abstand zueinander verlaufen, um die Möglichkeit zu eröffnen, die Aufnahmeflächen optimal an den Mantelflächenbereichen des Querträgerrohrs anzulegen.

Hinsichtlich der Festlegung der Seitenträgerhalteeinheit an dem Querträger wurden bislang keine näheren Angaben gemacht. So könnte beispielsweise eine zusätzliche formschlüssige Festlegung oder eine Festlegung über eine Klemmung erfolgen.

Besonders günstig ist es, wenn die Seitenträgerhalteeinheit durch Klemmelemente am Querträger fixierbar ist.

Besonders günstig lässt sich dies realisieren, wenn die Seitenträgerhalteelemente als Klemmelemente wirken.

Beispielsweise ist hierbei vorgesehen, dass die Seitenträgerhalteelemente mit mindestens einem Teil der Aufnahmeflächen klemmend an den Mantelflächenbereichen des Querträgerrohrs anliegen.

Besonders günstig ist es, wenn die Seitenträgerhalteelemente mit allen Aufnahmeflächen klemmend an den Mantelflächenbereichen des Querträgerrohrs anliegen.

Hinsichtlich der Anlage der Aufnahmeflächen an den Mantelflächenbereichen des Querträgerrohrs ist es beispielsweise denkbar, ebenfalls die Aufnahmeflächen profiliert auszubilden, das heißt entweder mit einer Verzahnung oder Rippen.

Eine besonders günstige Lösung sieht jedoch vor, dass die Aufnahmeflächen flächenhaft an den Mantelflächenbereichen des Querträgerrohrs anliegen. Insbesondere ist es dabei günstig, wenn die Aufnahmeflächen zu mehr als zwei Drittel ihrer Flächenausdehnung vollflächig an den Mantelflächenbereichen anliegen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels einer erfindungsgemäßen Anhängekupplung;
- Fig. 2: eine Draufsicht in Richtung des Pfeils A in Fig. 1;
- Fig. 3: eine Ansicht in Richtung des Pfeils B in Fig. 2;
- Fig. 4: einen Schnitt längs Linie 4-4 in Fig. 3;
- Fig. 5: einen Schnitt längs Linie 5-5 in Fig. 3;
- Fig. 6: einen Schnitt ähnlich Fig. 4 durch ein zweites Ausführungs- beispiel einer erfindungsgemäßen Anhängekupplung;
- Fig. 7: einen Schnitt ähnlich Fig. 4 durch ein drittes Ausführungs- beispiel einer erfindungsgemäßen Anhängekupplung;
- Fig. 8: einen Schnitt längs Linie 8-8 in Fig. 2 allerdings bei einem vierten Ausführungsbeispiel einer erfindungsgemäßen Anhängekupplung;
- Fig. 9: einen Schnitt ähnlich Fig. 5 bei einem fünften Ausführungs- beispiel einer erfindungsgemäßen Anhängekupplung und
- Fig. 10: einen Schnitt ähnlich Fig. 8 bei einem sechsten Ausführungs- beispiel einer erfindungsgemäßen Anhängekupplung.

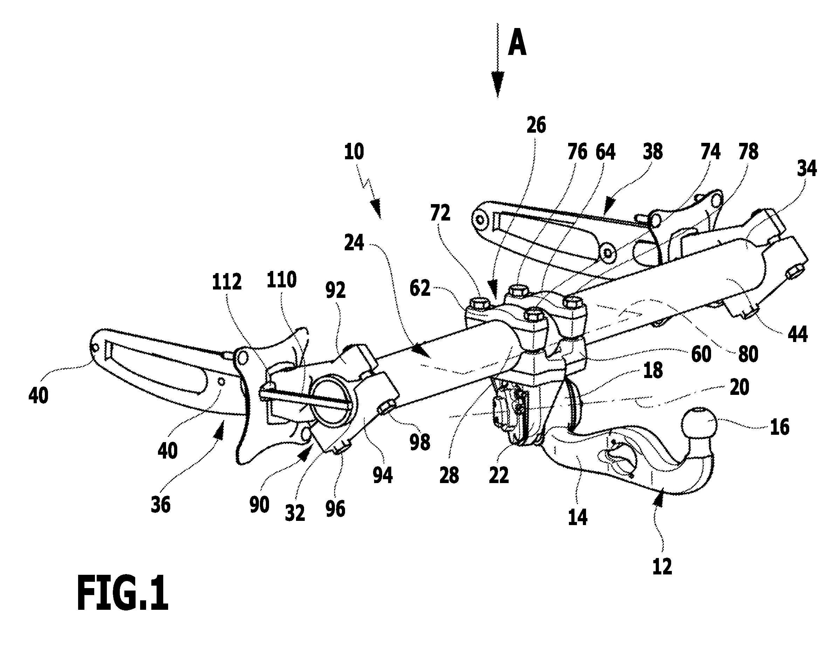

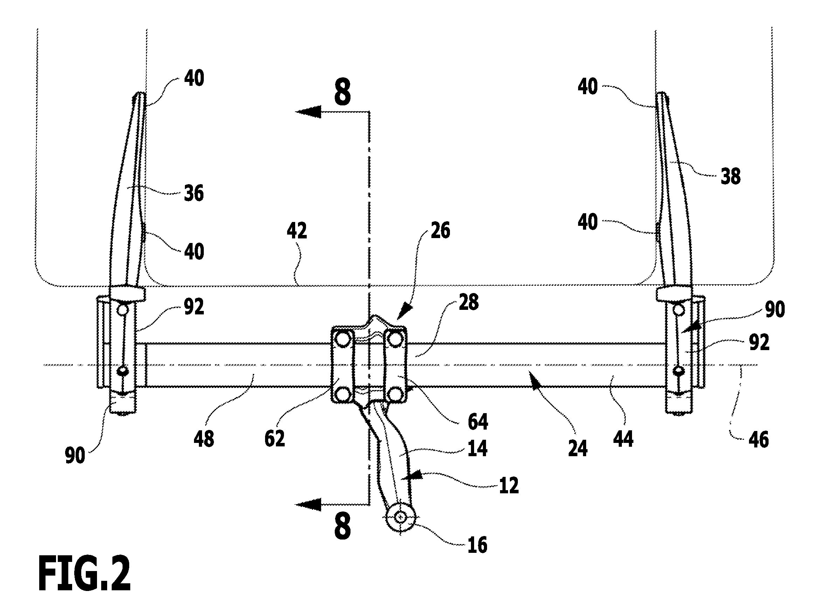

Ein in Fig. 1 bis 5 dargestelltes erstes Ausführungsbeispiel einer erfindungsgemäßen Anhängekupplung 10 umfasst ein Anhängeelement 12, welches einen Kugelhals 14 sowie eine Kupplungskugel 16 an einem Ende des Kugelhalses 14 sowie ein Lagerteil 18 am anderen Ende des Kugelhalses 14 umfasst, wobei das Lagerteil 18 beispielsweise um eine Schwenkachse 20 an einer als Ganzes mit 22 bezeichneten Lagereinheit schwenkbar lagert.

Die Lagereinheit 22 ist ihrerseits an einem als Ganzes mit 24 bezeichneten Querträger mittels einer als Klemmeinheit ausgebildeten Halteeinheit 26 an einem Zentralbereich 28 des Querträgers 24 gehalten und der Querträger 24 ist in seinen Endbereichen 32 und 34 an Seitenträgern 36 und 38 gehalten, die ihrerseits mit einer Karosserie des Kraftfahrzeugs verbindbar sind, wobei die Seitenträger 36 und 38 Montagepunkte 40 aufweisen, die mit der jeweiligen Karosserie 42 des Kraftfahrzeugs verbindbar sind.

Wie in Fig. 1, 4 und 5 dargestellt, ist der Querträger 24 durch ein Querträgerrohr 44 gebildet, welches sich längs einer Rohrachse 44 erstreckt und bei dem in den Fig. 1 bis 5 dargestellten Ausführungsbeispiel eine zur Rohrachse 46 kreiszylindrisch verlaufende äußere Mantelfläche 48 sowie eine zur Rohrachse 46 kreiszylindrisch verlaufende Innenfläche 50 aufweist, so dass eine Rohrwand 52 eine im Wesentlichen konstante Dicke in radialer Richtung zur Rohrachse 46 aufweist.

Vorzugsweise ist bei diesem ersten Ausführungsbeispiel das Querträgerrohr 44 als einstückig hergestelltes Rohr ausgebildet, dessen äußere Mantelfläche 48 frei von Vorsprüngen auf dieser aufgesetzten Formschlusskörpern ist.

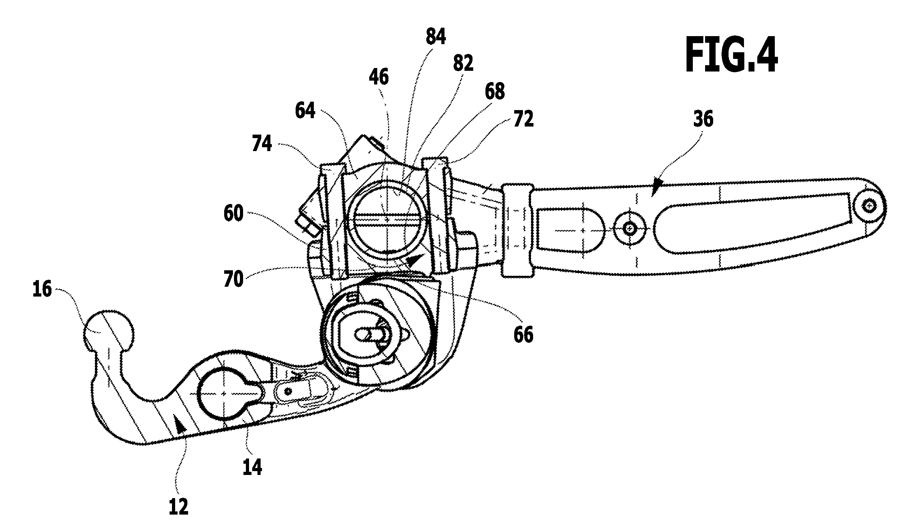

Die in dem Zentralbereich 28 angeordnete Halteeinheit 26 umgreift, wie beispielsweise in Fig. 1 und 4 dargestellt, den Querträger 24 sowie das Querträgerrohr 44 und ist hierzu mit Halteelementen 60, 62 und 64 versehen, wobei das Halteelement 60 einen Grundkörper bildet, an einem Fahrbahn zugewandten Mantelflächenbereich 66 der Mantelfläche 48 mit einer Stützfläche 68 flächenhaft anliegt, wobei die Stützfläche 68 sich bezogen auf die Rohrachse 46 in einer Umfangsrichtung 70 über einen Winkelbereich von mehr als 130° an dem Mantelflächenbereich 66 flächenhaft anlegt.

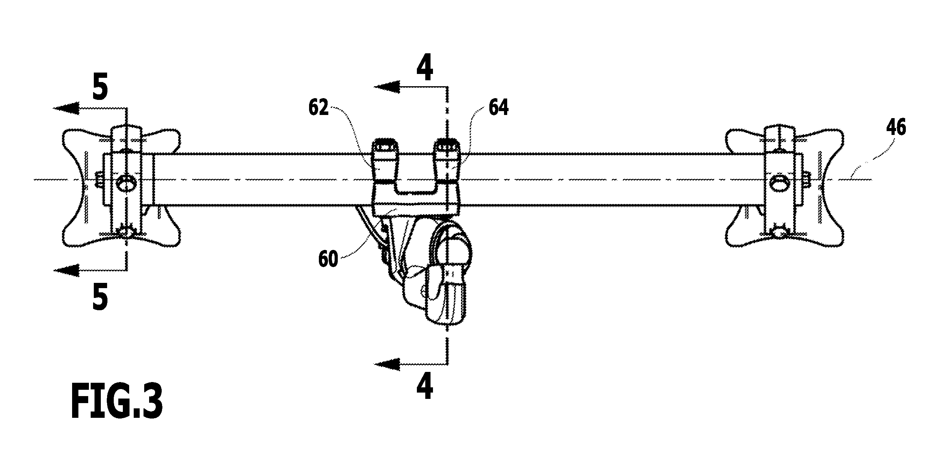

Mit diesem, das eine Halteelement bildenden Grundkörper 60, sind als Haltespangen 62, 64 ausgebildeten Halteelemente verbindbar, wobei die beiden Haltespangen 62 und 64, wie beispielsweise in Fig. 1 und 3 dargestellt, in Richtung der Rohrachse 46 im Abstand voneinander angeordnet sind und jede dieser Haltespangen 62 und 64 jeweils endseitig mit Verbindungselementen 72 und 74 bzw. 76 und 78 mit dem Grundkörper 60 verbindbar ist, wobei die Verbindungselemente 72, 74 bzw. 76, 78 im einfachsten Fall als Schrauben ausgebildet sind.

Vorzugsweise sind dabei die Haltespangen 62 und 64 sowie der Grundkörper 60 so ausgebildet, dass die Haltespangen 62 und 64 auf einer Seite einer Trennebene 80, vorzugsweise auf einer fahrbahnabgewandten Seite der Trennebene 80, liegen, während der Grundkörper 60 auf einer gegenüberliegenden Seite der Trennebene 80, insbesondere einer fahrbahnzugewandten Seite der Trennebene 80 liegt.

Die Trennebene verläuft vorzugsweise parallel zu einer horizontalen Ebene oder ist relativ zu der horizontalen Ebene maximal um plus/minus 20° geneigt.

Auch die Haltespangen 62 und 64 liegen jeweils ihrerseits an einem Mantelflächenbereich 82 der Mantelfläche 48 mit Stützflächen 84 flächig an, wobei die Stützflächen 84 sich bezogen auf die Rohrachse 46 ebenfalls in der Umfangsrichtung 70 über einen Winkel von mindestens 130° erstrecken.

Bei dem in den Fig. 1 bis 5 dargestellten Ausführungsbeispiel sind die Verbindungselemente 72 und 74 sowie 76 und 78 zur Verbindung der Haltespangen 62 bzw. 64 mit dem Grundkörper 60 als Spannschrauben ausgebildet und erlauben es somit, die Stützflächen 84 und 68 jeweils mit einer quer zu den Mantelflächenbereichen 66 bzw. 82 gerichteten Spannkraft beaufschlagt an den Mantelflächenbereichen 66 bzw. 82 des Querträgerrohrs 44 anzulegen und gegenüber diesen zu verspannen, so dass insgesamt die Stützflächen 68 bzw. 84 kraftschlüssig klemmend an den Mantelflächenbereichen 66 und 82 anliegen und damit die gesamte Halteeinheit 26 relativ zum Querträgerrohr 44 unbeweglich fixieren.

Die Stützflächen 68 und 84 sind dabei im einfachsten Fall als glatte Flächen ausgebildet, es ist aber auch denkbar, die Stützflächen 68 und 84 mit einer Profilierung, das heißt vorspringenden Profilelementen, zu versehen, wobei sich die vorspringenden Profilelemente dann zumindest teilweise in die Mantelflächenbereiche 66 bzw. 82 dann eingraben, wenn die Stützflächen 68 und 84 mit einer quer zu den Mantelflächenbereichen 66 und 82 wirkenden Spannkraft beaufschlagt an diesen anliegen.

Um eine einerseits materialsparende, andererseits möglichst stabile Verbindung zwischen der Halteeinheit 26 und dem Querträger 24 zu erhalten, ist die gesamte Halteeinheit 26 vorzugsweise so ausgebildet, dass die Verbindungselemente 72 und 74 bzw. 76 und 78 zwischen den Halteelementen 60 sowie 62 und 64 durchdringungsfrei zum Querträger 24, insbesondere zum Querträgerrohr 44 verlaufen, so dass der Querträger 24 und das Querträgerrohr 44 von der Halteeinheit 26 allseitig umgriffen sind.

Bei dem ersten Ausführungsbeispiel ist somit vorzugsweise die Halteeinheit 26 ausschließlich kraftschlüssig durch die an den Mantelflächenbereichen 66 und 82 anliegenden Stützflächen 68 bzw. 84 an dem Querträgerrohr 44 spielfrei fixiert und in der Lage, sämtliche über das Anhängeelement 12 einwirkenden Kräfte aufzunehmen.

Die Fixierung des Querträgers 24 an den Seitenträgern 36 und 38 erfolgt vorzugsweise durch an den Seitenträgern 36 bzw. 38 vorgesehenen Seitenträgerhalteeinheiten 90, wobei jede der Seitenträgerhalteeinheiten 90 zwei Seitenträgerhalteelemente 92 und 94 aufweist, wobei das Seitenträgerhalteelement 92 fest mit dem jeweiligen Seitenträger 36 bzw. 38 verbunden ist und einen Basiskörper bildet, während das Seitenträgerhalteelement 94 einen mit dem Basiskörper 92 lösbar verbindbaren Haltekörper 94 bildet, der insbesondere durch Verbindungselemente 96 bzw. 98 mit dem Basiskörper 92 verbindbar ist. Dabei sind die Verbindungselemente 96 bzw. 98 im einfachsten Fall als Schrauben ausgebildet.

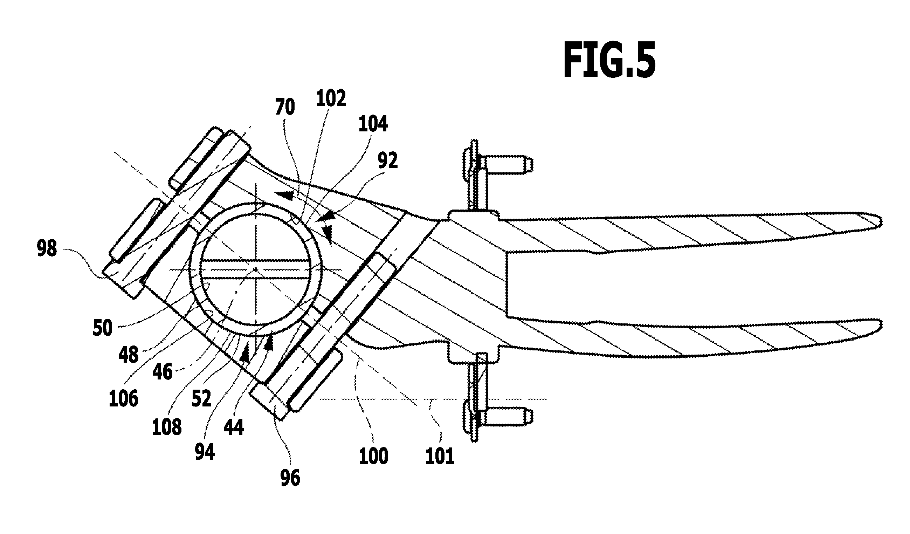

Wie insbesondere in Fig. 5 dargestellt, liegt der jeweilige Basiskörper 92 mit einer Aufnahmefläche 102 an einem Mantelflächenbereich 104 des Querträgerrohrs 44 an, wobei der Mantelflächenbereich 104 in dem Endbereich 32 oder 34 des Querträgerrohrs 44 liegt, wobei die Aufnahmefläche 102 sich in Umfangsrichtung 70 des Querträgerrohrs 44 bezogen auf die Rohrachse 46 über einen Winkelbereich von mindestens 130° erstreckt.

Auch der Haltekörper 94 liegt mit einer Aufnahmefläche 106 an einem Mantelflächenbereich 108 des Querträgerrohrs 44 flächig an, wobei auch die Aufnahmefläche 106 sich bezogen auf die Rohrachse 46 in der Umfangsrichtung 70 über einen Winkelbereich von mindestens 130° erstreckt.

Der Basiskörper 92 und der Haltekörper 94 sind durch eine Trennebene 100 getrennt, die relativ zu einer horizontalen Ebene 101 in einem Winkel zwischen 10° und 60° geneigt verläuft.

Die Aufnahmeflächen 102 und 106 sind somit in der Lage, das Querträgerrohr 44 zu tragen und abzustützen.

Vorzugsweise sind der Basiskörper 92 und der Haltekörper 94 durch die Verbindungselemente 96 und 98 so miteinander verspannbar, dass die Aufnahmeflächen 102 und 104 kraftbeaufschlagt klemmend an den Mantelflächenbereichen 104 und 108 anliegen und somit das Querträgerrohr 44 in den Endbereichen 32 bzw. 34 klemmend zwischen sich einspannen, um dieses relativ zu den Seitenträgern 36 bzw. 38 drehfest und in Richtung der Rohrachse 46 unbeweglich zu fixieren.

Auch die Seitenträgerhalteeinheiten 90 sind jeweils so ausgebildet, dass die Verbindungselemente 96, 98 durchdringungsfrei zu dem Querträger 24, insbesondere auch zum Querträgerrohr 44 verlaufen und somit der Querträger 24, insbesondere das Querträgerrohr 44, mit einem um den Querträger 24, insbesondere das Querträgerrohr 44 mit einem durchdringungsfrei zu diesen verlaufenden Kraftschluss umgreifen.

Um eine definierte Ausrichtung des Querträgers 24, insbesondere des Querträgerrohrs 44 zu erhalten, sind vorzugsweise an dem Querträger 24, insbesondere am Querträgerrohr 44, Ausrichtelemente 110 vorgesehen, welche mit an den Seitenteilen 36 und 38 vorgesehenen Ausrichtelementen 112 zusammenwirken, um eine definierte Ausrichtung des Querträgers 24, insbesondere des Querträgerrohrs 44, relativ zu den Seitenteilen 36 bzw. 38 zu erreichen und somit die Montage des Querträgers 24, insbesondere des Querträgerrohrs 44 relativ zu den Seitenteilen 36 bzw. 38 zu erleichtern.

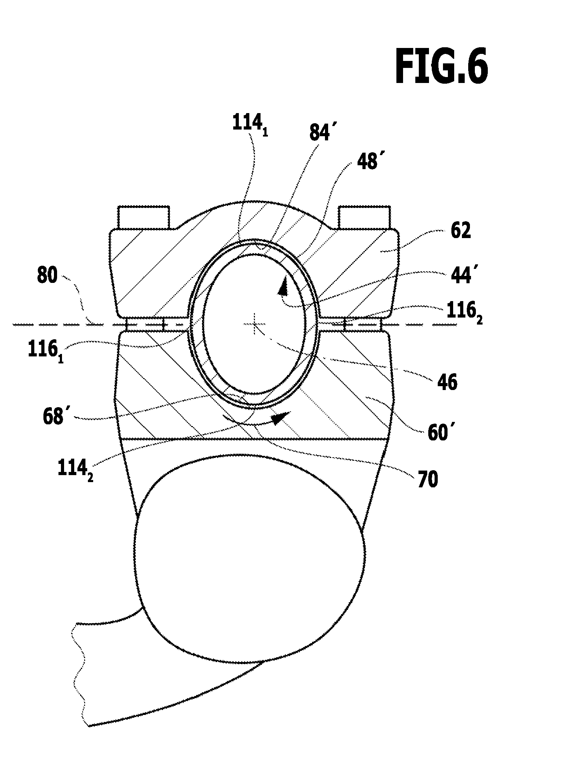

Bei einem zweiten Ausführungsbeispiel, dargestellt in Fig. 6, ist das Querträgerrohr 44' nicht als Querträgerrohr mit einem kreiszylindrischen Querschnitt, sondern mit einem ovalen Querschnitt ausgebildet, so dass die Mantelfläche 48' in der Umfangsrichtung 70 eine variierende Krümmung aufweist.

Entsprechend der Ausbildung der Mantelflächen 48' ist auch die Stützfläche 68' des Grundkörpers 60' dieser variierenden Krümmung der Mantelfläche 48' angepasst und in gleicher Weise ist auch die Stützfläche 84' der jeweiligen Haltespangen, in diesem Fall der Haltespange 62, an die Mantelfläche 48' angepasst.

In gleicher Weise sind bei diesem Ausführungsbeispiel dann auch die Aufnahmeflächen 102 und 106 der jeweiligen Seitenträgerhalteeinheit 90 ebenfalls an die Form der Mantelfläche 48' angepasst, so dass insgesamt ebenfalls auch ein flächiges Aufliegen der Aufnahmeflächen 102 und 106 auf der Mantelfläche 48' erfolgt.

Bei dem zweiten Ausführungsbeispiel weist die Mantelfläche 48' somit zwei Bereiche 114₁ und 114₂ mit verstärkter Krümmung auf, die auf gegenüberliegenden Seiten der Trennebene 80 liegen sowie zwischen diesen verlaufende Bereiche 116₁ bzw. 116₂ mit geringerer Krümmung, die zwischen den Bereichen 114 mit verstärkter Krümmung liegen.

Dies führt dazu, dass sich die Mantelfläche 48' mit geringer werdendem Abstand von der Trennfläche 80 zunehmend erweitert, so dass damit die Möglichkeit besteht, die Stützflächen 84' und 68' flächenhaft an der Mantelfläche 48' anzulegen.

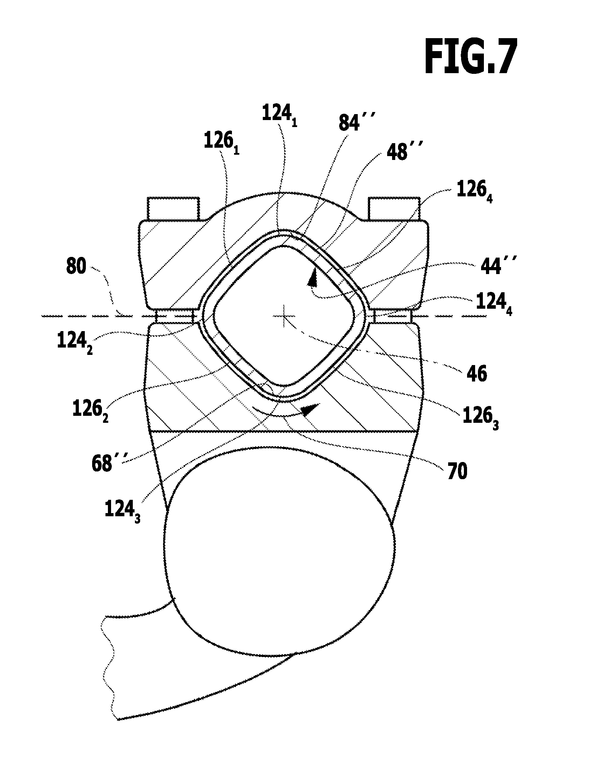

Bei einem dritten Ausführungsbeispiel, dargestellt in Fig. 7, ist das Querträgerrohr 44" so ausgebildet, dass dieses in der Umfangsrichtung 70 beispielsweise vier Bereiche 124₁, 124₂, 124₃ und 124₄ mit verstärkter Krümmung aufweist und zwischen diesen liegende Bereiche 126₁, 126₂, 126₃ und 126₄ mit geringerer Krümmung, die bis auf eine Krümmung Null reduziert sein kann.

Das Querträgerrohr 44" ist dabei relativ zur Trennebene 80 dann so angeordnet, dass zwei der Bereiche 124 mit verstärkter Krümmung auf gegenüberliegenden Seiten der Trennebene 80 liegen und die Trennebene 80 vorzugsweise zwei der Bereiche 124 mit verstärkter Krümmung schneidet. Damit liegen beispielsweise dann jeweils zwei Bereiche 126 mit geringerer Krümmung auf jeweils gegenüberliegenden Seiten der Trennebene 80.

Auch in diesem Fall ist somit eine vorteilhafte flächige Anlage der Stützflächen 68" und 84" an der Mantelfläche 48" erreichbar, da sich die Mantelfläche 48" jeweils mit geringer werdendem Abstand von der Trennebene 80 erweitert.

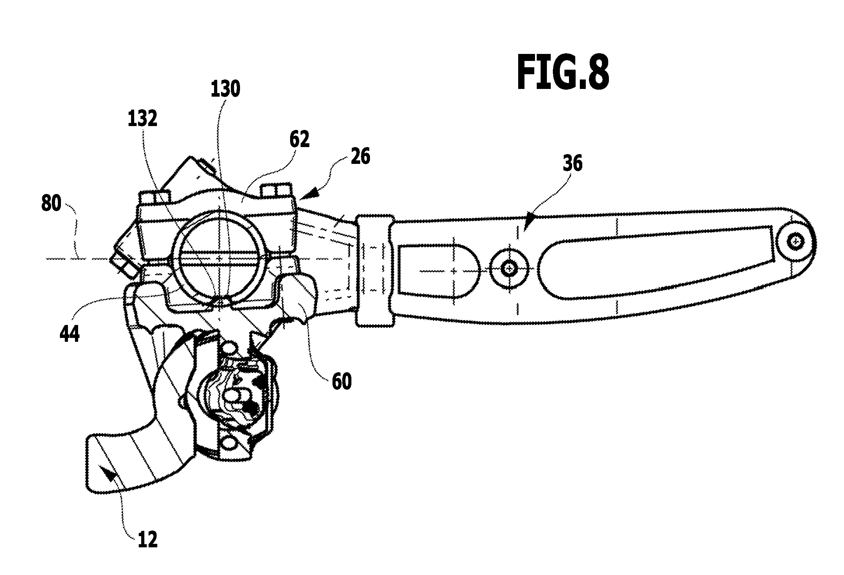

Bei einem vierten Ausführungsbeispiel der Anhängekupplung, dargestellt in Fig. 8, ist die Halteeinheit 26 in gleicher Weise wie beim ersten Ausführungsbeispiel ausgebildet, so dass hinsichtlich der Beschreibung der einzelnen Teile derselben vollinhaltlich auf die Ausführungen zum ersten Ausführungsbeispiel Bezug genommen werden kann.

Allerdings ist bei diesem Ausführungsbeispiel der Grundkörper 60 mit einem Fortsatz 130 versehen, welcher mit einer Ausnehmung 132 im Querträgerrohr 44 in Eingriff bringbar ist, um eine definierte Ausrichtung des Grundkörpers relativ zum Querträgerrohr 44 zu erreichen.

Dabei erfolgt nach wie vor eine kraftschlüssig klemmende Verbindung zwischen dem Grundkörper 60, den Haltespangen 62 und 64 und dem Querträgerrohr 44, die im Wesentlichen die Kräfte, die auf das Anhängeelement 12 wirken, auf das Querträgerrohr überträgt, so dass der Fortsatz 130 eine zusätzliche Verdrehsicherung für die Ausrichtung des Grundkörpers 60 und somit die Ausrichtung der gesamten Halteeinheit 26 relativ zum Querträgerrohr darstellt.

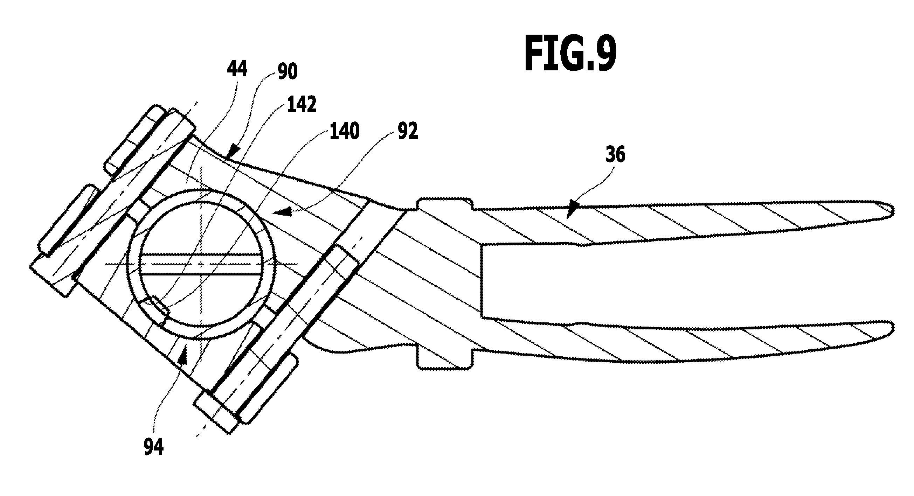

Bei einem fünften Ausführungsbeispiel der erfindungsgemäßen Anhängekupplung, dargestellt in Fig. 9, ist die Seitenträgerhalteeinheit 90 ebenfalls in gleicher Weise ausgebildet wie beim ersten Ausführungsbeispiel, ebenfalls nur mit dem einzigen Unterschied, dass in diesem Fall der Haltekörper 94 mit einem Fortsatz 140 versehen ist, welcher in eine Ausnehmung 142 im Querträgerrohr 44 eindringt und somit ebenfalls eine Verdrehsicherung für das Querträgerrohr 44 relativ zu der jeweiligen Seitenträgereinheit 90 darstellt.

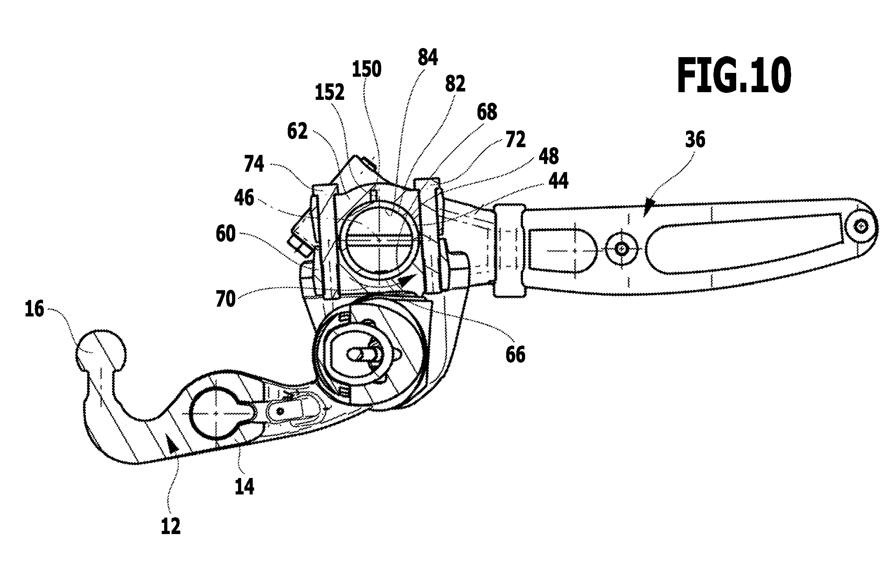

Bei einem sechsten Ausführungsbeispiel einer erfindungsgemäßen Anhängekupplung, dargestellt in Fig. 10, ist das Querträgerrohr 44 mit einem Formschlusskörper 150 versehen, welcher radial über die Mantelfläche 48 übersteht und in eine Formschlussaufnahme 152 eingreift, die in einer oder beiden Haltespangen 62, 64 vorgesehen ist, so dass der Formschlusskörper 150 und die Formschlussaufnahme 152 ebenfalls eine Ausrichtung der Halteeinheit 26 relativ zum Querträgerrohr 44 festlegt.

Der Formschlusskörper 150 ist dabei beispielsweise als aufgeschweißtes Teil ausgebildet, welches vorzugsweise entweder an einer der Fahrbahn zugewandten oder einer der Fahrbahn abgewandten Seite der Mantelfläche 48 sitzt, da in diesem Bereich der Mantelfläche 48 ein Aufschweißen eines Teils keinerlei Beeinträchtigung der Steifigkeit und Stabilität des Querträgerrohrs 44 zur Folge hat.

## Patentansprüche

1. Anhängekupplung für Kraftfahrzeuge umfassend ein Anhängeelement (12) zum Anhängen eines Fahrzeuganhängers oder Anbau eines Hecklastenträgers, einen Querträger (24), mit welchem eine das Anhängeelement (12) tragende Halteeinheit (26) verbunden ist, und den Querträger (24) an seinen Endbereichen (32, 34) mit einer Fahrzeugkarosserie (42) verbindende Seitenträger (36, 38),
**dadurch gekennzeichnet, dass** der Querträger (24) ein Querträgerrohr (44) umfasst, dass die Halteeinheit (26) lösbar am Querträger (24) gehalten ist, dass die Halteeinheit (26) den Querträger (24) in Umfangsrichtung (70) umgreifend ausgebildet ist und mindestens zwei Halteelemente (60, 62, 64) aufweist, die mit Stützflächen (68, 84) an Mantelflächenbereichen (66, 82) des Querträgerrohrs (44) anliegen, und dass die Halteeinheit (26) durch eine kraftschlüssige Klemmung am Querträger (24) fixierbar ist.

2. Anhängekupplung nach einem der voranstehenden Ansprüche, **dadurch gekennzeichnet, dass** die Halteeinheit (26) als ein Halteelement einen Grundkörper (60) aufweist, der eine das Anhängeelement (12) haltende Lagereinheit (22) trägt, und dass mit dem Grundkörper (60) als weiteres Halteelement mindestens eine Haltespange (62, 64) verbunden ist, und dass insbesondere die Halteelemente (60, 62, 64) auf gegenüberliegenden Seiten einer Trennebene angeordnet sind.

3. Anhängekupplung nach Anspruch 2, **dadurch gekennzeichnet, dass** mit dem Grundkörper (60) zwei in Längsrichtung des Querträgers (24) im Abstand voneinander angeordnete Haltespangen (62, 64) als Haltekörper verbunden sind.

4. Anhängekupplung nach einem der voranstehenden Ansprüche, **dadurch gekennzeichnet, dass** die Halteelemente (60, 62, 64) Stützflächen (68, 84) aufweisen, die mit geringer werdendem Abstand von der Trennebene (80) mit zunehmend größer werdendem Abstand voneinander verlaufen.

5. Anhängekupplung nach einem der voranstehenden Ansprüche, **dadurch gekennzeichnet, dass** die Halteeinheit (26) durch Klemmelemente (60, 62, 64) am Querträger (24) fixierbar ist und dass insbesondere die Halteelemente (60, 62, 64) als Klemmelemente wirken.

6. Anhängekupplung nach einem der voranstehenden Ansprüche, **dadurch gekennzeichnet, dass** das Querträgerrohr (44) in Umfangsrichtung (70) kantenfrei ausgebildet ist.

7. Anhängekupplung nach einem der voranstehenden Ansprüche, **dadurch gekennzeichnet, dass** das Querträgerrohr (44) eine in Umfangsrichtung (70) zu mehr als 70% des Umfangs gekrümmt verlaufende Mantelfläche (48) aufweist.

8. Anhängekupplung nach einem der voranstehenden Ansprüche, **dadurch gekennzeichnet, dass** das Querträgerrohr (44) ein in Umfangsrichtung (70) stets gekrümmt verlaufende Mantelfläche (48) aufweist.

9. Anhängekupplung nach einem der voranstehenden Ansprüche, **dadurch gekennzeichnet, dass** das Querträgerrohr (44) ein in Umfangsrichtung (70) hinsichtlich ihrer Krümmung in Umfangsrichtung variierende Mantelfläche (48) aufweist.

10. Anhängekupplung nach einem der voranstehenden Ansprüche, **dadurch gekennzeichnet, dass** das Querträgerrohr (44) eine in Umfangsrichtung (70) konstant gekrümmte Mantelfläche (48) aufweist.

11. Anhängekupplung nach einem der voranstehenden Ansprüche, **dadurch gekennzeichnet, dass** das Querträgerrohr (44) mit einer gegenüber der Mantelfläche (48) zurückgesetzt ausgebildeten Aufnahme (132) für ein Formschlusselement (130) der Halteeinheit (26) versehen ist.

12. Anhängekupplung nach Anspruch 11, **dadurch gekennzeichnet, dass** das Querträgerrohr (44) mindestens einen Durchbruch (142) zur Aufnahme eines Formschlusselements (140) der Halteeinheit (26) aufweist.

13. Anhängekupplung nach einem der voranstehenden Ansprüche, **dadurch gekennzeichnet, dass** die Seitenträger (36, 38) endseitig des Querträgers (24) mit lösbaren Seitenträgerhalteeinheiten (90) an dem Querträger (24) angreifen.

14. Anhängekupplung nach Anspruch 13, **dadurch gekennzeichnet, dass** jede der Seitenträgerhalteeinheiten mindestens zwei lösbar verbindbare Seitenträgerhalteelemente (92, 94) aufweist, welche mit Aufnahmeflächen (102, 106) an Mantelflächenbereichen (104, 108) des Querträgerrohrs (44) anliegen und dass insbesondere die Aufnahmeflächen (102, 106) der Seitenträgerhalteelemente (92, 94) insgesamt in Umfangsrichtung (70) über einen Winkelbereich von mehr als 200° an der Mantelflächen (48) des Querträgerrohrs (44) anliegen.

15. Anhängekupplung nach Anspruch 14, **dadurch gekennzeichnet, dass** die Seitenträgerhalteeinheit (90) als ein Seitenträgerhalteelement einen Basiskörper (92) aufweist, der mit dem jeweiligen Seitenträger (36, 38) verbunden ist und dass mit dem Basiskörper (92) als weiteres Seitenträgerhalteelement mindestens ein Haltekörper (94) verbunden ist.
